# FASCICULE DE BREVET EUROPEEN

(11) **EP 0 832 567 B1**
(45) Date de publication et mention de la délivrance du brevet: **19.12.2001**
(21) Numéro de dépôt: 96202670.4
(22) Date de dépôt: 24.09.1996
(51) Int. Cl.: A23G 1/00

(54) **Procédé de fabrication de chocolat ou analogue contenant de l'eau**
Verfahren zur Herstellung von Wasserenthaltender Schokolade oder eines ähnlichenwasserhaltigen Produkts
Process for preparing water containing chocolate or similar products containig water

(43) Date de publication de la demande: 01.04.1998
(73) Titulaire: SOCIETE DES PRODUITS NESTLE S.A., 1800 Vevey (CH)
(72) Inventeur: Windhab, Erich J., 8261 Hemishofen (CH); Wolf, Bettina, 8050 Zürich (CH); Traitler, Helmut, 1802 Corseaux (CH)
(74) Mandataire: Archambault, Jean

(56) Documents cités:
- EP-A- 0 393 327
- EP-A- 0 401 427
- WO-A-92/16112
- WO-A-93/12664

## Description

L'invention concerne un procédé de fabrication de chocolat ou analogue de teneur en eau élevée, dans lequel l'eau est en phase dispersée sous forme de microgouttes dans une phase grasse continue, contenant elle-même des sucres cristallisés.

Le chocolat est composé d'une phase grasse, de beurre de cacao et le cas échéant de graisse lactique, contenant essentiellement des composés solides, par exemple des fibres de cellulose, des cristaux de sucre et des protéines dispersés. Dans la préparation du chocolat, la poudre de cacao finement moulue ou raffinée est transformée en une suspension fluide de sucre, de cacao et le cas échéant de poudre de lait dans la phase grasse par l'opération de conchage. La teneur en eau d'un chocolat est approximativement 1 % en poids avant le conchage et < 1 % après cette opération qui produit une évaporation de l'eau.

Il y a un intérêt considérable dans le domaine de la confiserie/chocolaterie à augmenter la thermorésistance du chocolat et à réduire son contenu calorique. On a proposé différents moyens pour atteindre ces résultats.

Une voie a consisté à l'incorporation directe d'eau ou d'humectants, par exemple de glycérol. Lorsque l'on tente de fabriquer du chocolat ou analogue à teneur en eau élevée, dans lequel l'eau doit être sous forme dispersée et la phase grasse continue contenir du sucre cristallisé, il se produit le phénomène bien connu de prise en masse rapide par formation d'agglomérats lorsque l'on y incorpore directement une phase aqueuse. Pour obtenir les propriétés d'écoulement convenables compatibles avec les étapes de la fabrication du chocolat, on prend soin de maintenir la teneur en eau des masses de chocolat en dessous de 1 % en poids. Le phénomène physique à l'origine de l'épaississement spontané des masses de chocolat par addition d'eau n'est pas encore complétement élucidé.

D'après les connaissances actuelles, l'origine de l'augmentation rapide et considérable de la viscosité serait attribuable à l'interaction entre les surfaces hydrophiles des cristaux de sucre et les poches d'eau qui formeraient une structure de liaison sucre-eau. Celà a pour conséquence que l'augmentation de viscosité induite est d'autant plus forte que les cristaux de sucre se dissolvent dans les poches d'eau, ce qui pourrait expliquer la viscosité élevée d'une solution aqueuse de sucre émulsifiée. Le chocolat ainsi transformé est pratiquement impossible à manipuler et présente une sensation en bouche grossière et sableuse.

D'autres voies ont consisté à ajouter des substances hydratées, des mousses, sirops, gels ou émulsions, huile dans l'eau ou eau dans l'huile. Un exemple d'une telle approche par incorporation d'une émulsion eau dans l'huile est constitué par le procédé décrit dans US-A-5160760, selon lequel on prépare une émulsion d'une solution aqueuse d'hydrate de carbone et d'une graisse en présence d'un émulsifiant, puis on mélange l'émulsion avec une masse tempérée de chocolat. Le but visé est la thermorésistance plutôt que le degré d'incorporation d'eau, qui est de l'ordre de 1 à 3 %.

Dans un autre cas, US-A-5468509 décrit un procédé de production de chocolat au lait contenant jusqu'à 16 % d'eau, selon lequel on enrobe d'abord le cacao avec du beurre de cacao et de la lécithine, on prépare séparément une phase aqueuse par mélange de poudre de lait, de sucre et d'eau, puis l'on mélange précautionneusement le cacao enrobé et la phase aqueuse et l'on tempère le mélange ainsi réalisé.

Le procédé décrit dans EP 0 401 427 divulgue un chocolat contenant de la crème lactique. Selon ce procédé on prépare une émulsion eau-dans-l'huile par inversion d'une émulsion huile-dans-l'eau à base de crème contenant moins de 30 % de graisse lactique. Ainsi, une crème proprement dite (contenant 47 % de graisse lactique) ou une crème concentrée (contenant jusqu'à 80 % de graisse lactique), qui est une émulsion huile-dans-l'eau, est inversée en une émulsion eau-dans-l'huile en présence d'émulsifiants lipophiles. L'émulsion ainsi obtenue est ensuite mélangée par pétrissage à une base de chocolat fondu.

Le procédé selon WO 92 16112 fournit un moyen d'ajouter de l'eau au chocolat en utilisant la technique des micelles inverses pour former une émulsion eau-dans-l'huile stable de lécithine hydratée. L'émulsion stable eau-dans-l'huile est ajoutée à du chocolat tempéré durant le traitement.

Le document WO 93 12664 concerne la préparation d'un chocolat thermorésistant par mélange d'une microémulsion eau-dans-l'huile dans une masse de chocolat. La microémulsion est constituée de plus de 50 % d'émulsifiants. Les goutelettes d'eau de la microémulsion ont une dimension de 10 à 10 000 Angstrom.

Le problème à la base de l'invention est la mise à disposition d'un procédé dans lequel on puisse incorporer jusqu'à 40 % en poids d'eau dans une matrice de chocolat et analogue conventionnelle sans modification significative de son comportement rhéologique, mis à part une diminution de la viscosité et donc sans modification des paramètres de production liés, par exemple, aux opérations de moulage, enrobage et remplissage.

L'invention concerne donc un procédé de préparation de chocolat ou analogue de teneur en eau élevée, dans lequel l'eau est en phase dispersée sous forme de microgouttes dans une phase grasse continue, contenant elle-même des sucres cristallisés, dans lequel on prépare une base émulsionnée eau-dans-l'huile sous agitation moyenne en présence d'un émulsifiant, on crée une émulsion fine par agitation rapide, on ajoute progressivement du chocolat ou un analogue au chocolat sous forme fondue à cette émulsion fine sous agitation de faible à moyenne, de sorte que l'on évite essentiellement la destruction de la structure eau-dans-l'huile de l'émulsion ainsi que le contact entre les composants sucrés et les solides non gras du cacao d'une part et la phase aqueuse dispersée d'autre part, lequel contact est responsable de la formation d'agglomérats et on solidifie ensuite le chocolat à teneur élevée en eau ainsi obtenu, par cristallisation dans des conditions de faible turbulence et à température contrôlée, de manière à maintenir l'aptitude du chocolat à la transformation par le processus de fabrication classique.

Dans le contexte de l'invention, on entend par "analogue au chocolat" une masse de confiserie dont la composition est voisine de celle du chocolat, c'est à dire contenant de la matière grasse constituant la phase continue et du sucre dispersé dans cette phase grasse. Ainsi, tout ou partie du beurre de cacao peut être remplacé par une graisse d'origine végétale ou un mélange de graisses d'origine végétale d'usage courant en confiserie et dont les propriétés physico-chimiques sont analogues ou équivalentes à celles du beurre de cacao. Dans le même ordre d'idées, les solides non gras du cacao peuvent être remplacés totalement ou en partie par des constituants d'usage usuel en confiserie chocolaterie. Enfin, le saccharose peut être remplacé en partie ou en totalité par un substitut, tel que, de préférence, un agent sucrant basse calorie. Aussi, dans la suite de l'exposé, le terme chocolat sera employé pour désigner le chocolat et ses analogues.

La phase aqueuse de l'émulsion eau dans l'huile peut contenir un polyol, par exemple le glycérol, si l'on veut améliorer la stabilité microbiologique du chocolat. Elle peut avantageusement contenir des substances hydrosolubles, par exemple des arômes, des agents de préservation, des substances actives, des oligoéléments et/ou des vitamines.

Pour mettre en oeuvre le procédé, dans une première étape on prépare une base émulsionnée ou pre-émulsion eau-dans-l'huile, par exemple dans le cas de chocolat à base de beurre de cacao en tant que phase grasse continue à environ 45° C sous agitation en présence d'un émulsifiant. La teneur en eau d'une telle pré-émulsion peut être 10-80 % en poids et de préférence 40-70 % en poids. Pour ce faire, on peut mélanger les ingrédients dans une cuve thermostatée à l'aide d'un agitateur, par exemple en forme d'ancre ou en ancre avec pale coaxiale ou à hélice, à vitesse de rotation moyenne. On introduit de préférence le milieu aqueux chaud, par exemple à environ 70° C, par petites doses.

On peut utiliser comme émulsifiant, de préférence, une lécithine, un ester d'acide gras et de polyglycérol ou un mélange de tels émulsifiants en quantité de 0,5 à 3 % en poids, et de préférence d'environ 1 % en poids. Le cas échéant, on ajoute au milieu aqueux des sels de préservation assurant la stabilité microbioligique, par exemple le benzoate de sodium et le sorbate de potassium. On peut également ajouter les autres composants hydrosolubles. On peut utiliser comme composition contenant de l'eau, c'est à dire comme source d'eau, par exemple une crème ou un lait concentré sucré ou non.

Par le biais de l'incorporation d'eau, on peut préparer des chocolats fonctionnels à valeur nutritionnelle, par exemple en y incorporant du calcium, par exemple sous forme de lactate de calcium et de la vitamine C.

La seconde étape du procédé consiste à créer une émulsion fine au moyen, par exemple d'un moulin colloïdal à couronne dentée à rotation rapide, par exemple à vitesse de rotation d'environ 8000 t/min, avec interstice de dispersion étroit, par exemple de l'ordre de 0,5 mm. Au sein de cette émulsion, les gouttes doivent avoir un diamètre moyen inférieur ou égal à environ 2 micron et l'émulsion ne doit pas se séparer dans le temps nécessaire à son traitement ultérieur, c'est à dire qu'elle doit être stable de préférence pendant environ 1 h.

Dans une troisième étape, on incorpore par petites doses dans la totalité de l'émulsion eau dans l'huile une masse grasse, par exemple de chocolat fondue maintenue à environ 45° C de manière ménagée sous agitation de faible à moyenne. La base émulsionnée eau dans l'huile stabilisée peut être mélangée avec la masse de chocolat ou d'analogue dans un rapport pondéral base émulsionnée: masse de chocolat ou analogue de 1:20 à 2:1.

On peut procéder par charges. On peut utiliser pour ce faire, par exemple un agitateur à bande hélicoïdale ou à ancre associé le cas échéant à un élément complémentaire à pale coaxial. Cette incorporation n'induit pas d'épaississement notable du mélange si le travail mécanique est effectué avec précaution et si les gouttes d'eau sont petites et bien stabilisées. Dans le cas du chocolat, ce peut être du chocolat noir, du chocolat au lait ou encore du chocolat blanc, c'est à dire que la masse ne contient pas de solides non gras du cacao.

Selon une alternative, on peut réaliser l'incorporation de la masse de chocolat ou d'analogue dans l'émulsion eau dans l'huile en continu au moyen d'un ou de plusieurs mélangeurs statique(s) disposés en série.

Dans une quatrième étape, on cristallise ensuite le chocolat dans des conditions de faible turbulence, par exemple au moyen d'un cristalliseur à surface raclée à large interstices, de manière conventionnelle en contrôlant la température pour le tempérer. La cristallisation a cependant une durée supérieure à ce qui est pratiqué habituellement, du fait de la tendance du mélange à cristalliser plus lentement qu'un chocolat conventionnel.

Le produit final a une teneur en eau de 1 à 40 % en poids.

Le chocolat obtenu est économique, hypocalorique, de goût neutre et thermorésistant. Il peut servir de véhicule à des composants nutritionnels ou à des substances biologiquement actives. Il peut être moulé ou utilisé comme fourrage ou centre ou composition d'enrobage.

Selon un mode de réalisation avantageux, l'on soumet le chocolat à un conditionnement thermique dans une étape ultérieure et que l'on obtient ainsi une dissolution partielle ou totale du sucre cristallisé dans les gouttes d'eau tout en maintenant intacte la structure de l'émulsion eau-dans-l'huile.

Le conditionnement thermique du chocolat ou de l'analogue peut avoir lieu après tempérage/remplissage/versement de la masse dans des moules, par maintien à une température de 25 à 30° C pendant 1 heure à 1 semaine.

Les exemples ci-après, dans lesquels les pourcentages et parties sont pondéraux, sauf indication contraire, illustrent l'invention.

### Exemples 1-6

Dans une cuve thermostatée munie d'un agitateur à ancre, on prépare une pré-émulsion par mélange de 200 g de beurre de cacao fondu contenant l'émulsifiant à 45° C avec de l'eau avec rotation de l'agitateur à 280 t/min pendant 20 min, jusqu'à ce que l'émulsion contienne 40 % d'eau.

On traite ensuite l'émulsion dans un moulin colloïdal à couronne dentée Polytron®, dont le rotor tourne à une vitesse de 8000 t/min, pendant 1 min. A 243 g de l'émulsion fine produite, on ajoute progessivement 657 g de chocolat noir fondu de 26,1 % de matière grasse (rapport émulsion/chocolat = 0,37) sous agitation à l'aide d'un mélangeur en forme d'ancre tournant à 250 t/min pendant 3 min.

On tempère ensuite le mélange pendant 1 min à 26,5° C, puis 3 min à 31° C et on le verse dans des moules à 31° C.

Selon une alternative, on utilise un mélange non tempéré que l'on verse à 41° C dans des moules.

Après entreposage du produit pendant 15 min à 12° C, on le conserve à 18° C. On effectue sur le produit un test de blanchîment gras avec le cycle de température 31° C - 21° C - 31° C - 21° C pendant 6 h à chaque température.

Le chocolat obtenu a 10 % d'eau et 36 % de matière grasse. Les ingrédients (mis à part l'eau) utilisés dans la pre-émulsion et leurs proportions sont indiqués dans le tableau 1 ci-après.

**Tableau 1**

| **Exemple** | **1** | **2** | **3** | **4** | **5** | **6** |
|---|---|---|---|---|---|---|
| **Pre-émulsion** -Emulsifiant (%) | | | | | | |
| a | 0,5 | 1 | 0,5 | 1 | 0,5 | 0,5 |
| b | 0,5 | - | - | - | - | - |
| c | - | - | 0,5 | 2 | - | - |
| d | - | - | - | - | 0,1 | - |
| e | - | - | - | - | - | 0,2 |
| -Beurre de cacao (%) | 59 | 59 | 59 | 57 | 59,4 | 59,3 |
| Eau (%) | 40 | 40 | 40 | 40 | 40 | 40 |
| **Légende:** a: Polyglycérolester d'acide ricinoléique interestérifié b: Lécithine de soja et phosphatide d'ammonium c: Lécithine de soja raffinée et polyglycérol polyricinoléate d: Fraction de lécithine de soja délipidée e: Lécithine de soja pure délipidée et granulée | | | | | | |

Dans le tableau 2, ci-après, on indique les résultats des mesures de dimension et de répartition des dimensions des gouttes d'eau au sein de la pre-émulsion, du chocolat sans eau incorporée (dont la teneur en matière grasse a été amenée à la même valeur que celle du chocolat selon l'invention par addition de beurre de cacao) et du chocolat obtenu selon l'invention par balayage laser.

**Tableau 2**

| **Dimension des gouttes d'eau (micron)** | **Emulsion eau dans l'huile** | **Chocolat sans eau incorporée** | **Chocolat selon l'invention** |
|---|---|---|---|
| **X**_{10,0} | 1,07 | 2,61 | 3,9 |
| **X**_{50,0} | 1,90 | 8,70 | 13,5 |
| **X**_{90,0} | 3,55 | 56,7 | 84,2 |

Légende: X_{n,0} signifie que n % de l'ensemble des gouttes ont un diamètre < ou = à X en micron.

Les résultats montrent que les gouttes d'eau ont une répartition de dimension étroite (de 0,5 à 5 micron) dans l'émulsion avec une valeur moyenne de 1,4 micron. Ils montrent également une légère augmentation des diamètres par rapport au chocolat sans eau incorporée. Cette légère augmentation indique une tendance à la fixation d'eau à la surface du sucre, mais ce phénomène n'intervient que faiblement et dans une proportion n'affectant pas le comportement rhéologique du chocolat.

Dans le tableau 3 ci-après, on compare les propriétés d'écoulement (contrainte de cisaillement en fonction de la vitesse de cisaillement) du chocolat d'origine et du chocolat avec eau incorporée selon l'invention, à 40° C.

**Tableau 3**

| **Vitesse de cisaillement (1/s)** | **Contrainte de cisaillement du chocolat sans eau incorporée (Pa)** | **Contrainte de cisaillement du chocolat avec eau incorporée (Pa)** |
|---|---|---|
| 5 | 22 | 30,5 |
| 10 | 30 | 33,2 |
| 50 | 70,5 | 68 |
| 100 | 112 | 103 |

On observe un comportement quasi-identique dans le domaine des vitesses de cisaillement de moyennes à élevées, cependant que le chocolat avec eau incorporée selon l'invention montre un décalage vers le haut de la contrainte de cisaillement dans les vitesses de cisaillement basses. Ceci s'explique par la légère augmentation de l'interaction gouttes d'eau-cristaux de sucre dans un milieu hautement dispersé. Ce n'est pas comparable à la forte interaction eau-sucre due aux gouttes d'eau de grande dimensions qui conduirait à une augmentation de contrainte de cisaillement de 10 à 20 fois par rapport au chocolat sans eau incorporée.

### Exemple 7

Dans une cuve thermostatée munie d'un agitateur à ancre, on prépare une pré-émulsion par mélange de 200 g de beurre de cacao fondu contenant comme émulsifiant un polyglycérolester d'acide ricinoléique interestérifié à une quantité de 3 % à 45° C avec 300 g d'eau avec rotation de l'agitateur à 280 t/min pendant 20 min, jusqu'à ce que l'émulsion contienne 60 % d'eau.

On traite ensuite l'émulsion dans un moulin colloïdal à couronne dentée Polytron®, dont le rotor tourne à une vitesse de 8000 t/min, pendant 1 min. A 200 g de l'émulsion fine produite, on ajoute progessivement 400 g de chocolat au lait fondu contenant du maltitol en remplacement du saccharose, de 26 % de matière grasse (rapport émulsion/chocolat = 0,5) sous agitation à l'aide d'un mélangeur en forme d'ancre tournant à 250 t/min pendant 3 min.

Après inoculation avec 0,5 % de chocolat noir râpé tempéré, on laisse le mélange 5 min à 31° C et on le verse dans des moules à cette température.

Dans les exemples précédents, on a montré l'incorporation d'eau dans un chocolat noir et dans un chocolat au lait. La même incorporation d'eau sous la forme d'une émulsion eau-dans-l'huile est possible dans un chocolat blanc ou dans toute masse grasse contenant du sucre dispersé. L'invention est ainsi applicable à la fabrication de masses moulées, de masses d'enrobage ou de fourrage.

Dans tous les cas, les masses avec eau incorporée préparées selon l'invention ont un comportement rhéologique permettant de les traiter sans modification des paramètres dans les opérations de production conventionnelles de confiserie/chocolaterie. Les qualités organoleptiques des chocolats et masses sont maintenues et il n'y a pas d'apparition de blanchîment gras.

## Revendications

1. Procédé de préparation de chocolat ou analogue de teneur en eau élevée, dans lequel l'eau est en phase dispersée sous forme de microgouttes dans une phase grasse continue, contenant elle-même des sucres cristallisés, dans leaquel on prépare une base émulsionnée eau-dans-l'huile sous agitation moyenne en présence d'un émulsifiant,
on crée une émulsion fine par agitation rapide,
on ajoute progressivement du chocolat ou un analogue au chocolat sous forme fondue à cette émulsion fine sous agitation de faible à moyenne, de sorte que l'on évite essentiellement la destruction de la structure eau-dans-l'huile de l'émulsion ainsi que le contact entre les composants sucrés et les solides non gras du cacao d'une part et la phase aqueuse dispersée d'autre part, lequel contact est responsable de la formation d'agglomérats et
on solidifie ensuite le chocolat à teneur élevée en eau ainsi obtenu, par cristallisation dans des conditions de faible turbulence et à température contrôlée, de manière à maintenir l'aptitude du chocolat à la transformation par le processus de fabrication classique.

2. Procédé selon la revendication 1, **caractérisé par le fait que** l'on soumet le chocolat ou l'analogue à un conditionnement thermique dans une étape ultérieure et que l'on obtient ainsi une dissolution partielle ou totale du sucre cristallisé par diffusion dans les gouttes d'eau tout en maintenant intacte la structure de l'émulsion eau-dans-l'huile et que le conditionnement thermique du chocolat ou de l'analogue a lieu après tempérage/remplissage/versement de la masse dans des moules, par maintien à une température de 25 à 30° C pendant 1 heure à 1 semaine.

3. Procédé selon la revendication 1, **caractérisé par le fait que** le produit final a une teneur en eau de 1 à 40 % en poids.

4. Procédé selon la revendication 1, **caractérisé par le fait que** la base émulsionnée eau-dans-l'huile stabilisée contient 10 à 80 % d'eau en poids et qu'elle est mélangée avec la masse de chocolat ou d'analogue dans un rapport pondéral base émulsionnée: masse de chocolat ou analogue de 1:20 à 2:1.

5. Procédé selon la revendication 1, **caractérisé par le fait que**, par l'intermédiaire des microgouttes d'eau, l'on incorpore au chocolat ou analogue des composants hydrosolubles tels que des arômes, des vitamines, des minéraux, des agents conservateurs et des substances actives.

6. Procédé selon la revendication 1, **caractérisé par le fait que** l'incorporation de la masse de chocolat ou d'analogue dans l'émulsion eau-dans-l'huile a lieu par charges au moyen d'agitateurs faiblement sollicités mécaniquement, notamment sous forme de bande hélicoïdale tournant lentement, de sorte que l'on évite une interaction par contact entre les cristaux de sucre ou les particules de solides du cacao et les microgouttes et la formation d'une structure de viscosité notablement élevée.

7. Procédé selon la revendication 1, **caractérisé par le fait que** l'incorporation de la masse de chocolat ou d'analogue dans l'émulsion eau-dans-l'huile a lieu en continu au moyen d'un ou de plusieurs mélangeur(s) statique(s) disposés en série.

8. Procédé de fabrication d'un article moulé, d'une masse de fourrage, d'une composition d'enrobage ou d'un support de vitamines, de minéraux et/ou de substances actives, **caractérisé par le fait que** l'on utilise comme matière première une masse de chocolat ou d'analogue au chocolat obtenue par le procédé selon l'une des revendications 1 à 7.

## Patentansprüche

1. Verfahren zur Herstellung von Schokolade oder einem schokoladeähnlichen Produkt mit erhöhtem Wassergehalt, bei dem das Wasser in dispergierter Phase in Form von Mikrotropfen in einer kontinuierlichen Fettphase vorliegt, die ihrerseits kristallisierte Zucker enthält, bei dem man
eine emulgierte Wasser-in-Öl-Basis unter mäßigem Rühren in Gegenwart eines Emulgators herstellt,
durch schnelles Rühren eine feine Emulsion herstellt, dieser feinen Emulsion allmählich Schokolade oder schokoladeähnliches Produkt in geschmolzener Form unter schwachem bis mäßigem Rühren so zugibt, dass man die Zerstörung der Wasserin-Öl-Struktur der Emulsion sowie den für die Bildung von Agglomeraten verantwortlichen Kontakt zwischen den Zuckerbestandteilen und den Nichtfettfeststoffen des Kakaos einerseits und der dispergierten wässrigen Phase andererseits im wesentlichen vermeidet, und dann
die auf diese Weise erhaltene Schokolade mit erhöhtem Wassergehalt durch Kristallisation unter Bedingungen einer schwachen Turbulenz und bei kontrollierter Temperatur so verfestigt, dass die Eignung der Schokolade zur Verarbeitung in dem herkömmlichen Herstellungsprozess erhalten bleibt.

2. Verfahren nach Anspruch 1, **dadurch gekennzeichnet, dass** man die Schokolade oder das schokoladeähnliche Produkt in einem darauffolgenden Schritt einer thermischen Konditionierung unterzieht und auf diese Weise eine partielle oder vollständige Auflösung des Kristallzuckers durch Diffusion in die Wassertropfen erhält, wobei man gleichzeitig die Wasser-in-Öl-Struktur unversehrt beibehält, und dass die thermische Konditionierung der Schokolade oder des schokoladeähnlichen Produkts nach dem Temperieren/Füllen/Gießen der Masse in Formen dadurch stattfindet, dass sie 1 Stunde bis 1 Woche auf einer Temperatur von 25 bis 30°C gehalten wird.

3. Verfahren nach Anspruch 1, **dadurch gekennzeichnet, dass** das Endprodukt einen Wassergehalt von 1 bis 40 Gew.-% hat.

4. Verfahren nach Anspruch 1, **dadurch gekennzeichnet, dass** die emulgierte Wasser-in-Öl-Basis 10 bis 80 Gew.-% Wasser enthält und dass sie mit der Masse aus Schokolade oder schokoladeähnlichem Produkt in einem Gewichtsverhältnis von emulgierter Basis zu Masse von 1:20 bis 2:1 gemischt wird.

5. Verfahren nach Anspruch 1, **dadurch gekennzeichnet, dass** man in die Schokolade oder in das schokoladeähnliche Produkt über die Wassermikrotropfen wasserlösliche Bestandteile wie Aromastoffe, Vitamine, Mineralstoffe, Konservierungsmittel oder aktive Substanzen einarbeitet.

6. Verfahren nach Anspruch 1, **dadurch gekennzeichnet, dass** die Einarbeitung der Masse aus Schokolade oder schokoladeähnlichem Produkt in die Wasser-in-Öl-Emulsion ansatzweise mit Hilfe von mechanisch schwach belasteten Rührern insbesondere in Form eines sich langsam drehenden schraubenförmigen Bandes erfolgt, so dass man eine Wechselwirkung durch Kontakt zwischen den Zuckerkristallen oder den Feststoffpartikeln des Kakaos und den Mikrotropfen und die Bildung einer Struktur von einer erheblich erhöhten Viskosität vermeidet.

7. Verfahren nach Anspruch 1, **dadurch gekennzeichnet, dass** die Einarbeitung der Masse aus Schokolade oder schokoladeähnlichem Produkt in die Wasser-in-Öl-Emulsion kontinuierlich mit Hilfe eines oder mehrerer in Reihe angeordneter statischer Mischer stattfindet.

8. Verfahren zur Herstellung eines Formgegenstands, einer Füllungsmasse, einer Umhüllungszusammensetzung oder eines Trägers für Vitamine, Mineralstoffe und/oder aktive Substanzen, **dadurch gekennzeichnet, dass** man als Ausgangsstoff eine Masse aus Schokolade oder schokoladeähnlichem Produkt verwendet, die in dem Verfahren nach einem der Ansprüche 1 bis 7 hergestellt wurde.

## Claims

1. Process for preparing chocolate or the like with a high water content, in which water is in the dispersed phase in the form of microdroplets in a continuous fatty phase, itself containing crystallized sugars, wherein an oil-in-water emulsified base is prepared with moderate stirring in the presence of an emulsifier,
a fine emulsion is created by rapid stirring,
chocolate or a product similar to chocolate in molten form is added progressively to this fine emulsion with moderate stirring, so as substantially to prevent the destruction of the water-in-oil structure of the emulsion as well as contact between the sugar components and the non-fat solids of cocoa on the one hand and the dispersed aqueous phase on the other hand, which contact is responsible for the formation of agglomerates and
the chocolate with a high water content obtained in this way is solidified by crystallization under conditions of low turbulence and at a controlled temperature, so as to maintain the ability of the chocolate to be converted by the conventional manufacturing process.

2. Process according to claim 1, **characterized in that** chocolate or the like is subjected to thermal conditioning in a subsequent step and that partial or total solution of the crystallized sugar is obtained in this way by diffusion into the water droplets while maintaining the structure of the water-in-oil emulsion intact and **in that** thermal conditioning of the chocolate or the like occurs after tempering/filling/pouring of the mass into moulds, with the temperature being maintained at 25 to 30°C for 1 hour to 1 week.

3. Process according to claim 1, **characterized in that** the final product has a water content of 1 to 40 % by weight.

4. Process according to claim 1, **characterized in that** the stabilized water-in-oil emulsified base contains 10 to 80 % water by weight and **in that** it is mixed with the mass of chocolate or the like in a weight ratio of emulsified base:mass of chocolate or the like of 1:20 to 2:1.

5. Process according to claim 1, **characterized in that**, via the water microdroplets, water soluble components such as flavours, vitamins, minerals, preserving agents and active substances are incorporated in the chocolate.

6. Process according to claim 1, **characterized in that** the incorporation of the mass of chocolate or the like into the water-in-oil emulsion is carried out in batches by means of stirrers which are stressed mechanically only to a small degree, in particular in the form of a slowly rotating helical strip, so that interaction by contact is prevented between the sugar crystals or the particles of cocoa solids and the microdroplets and the formation of a structure with a particularly high viscosity.

7. Process according to claim 1, **characterized in that** the incorporation of the mass of chocolate or the like into the water-in-oil emulsion is carried out continuously by means of one or more static mixers arranged in series.

8. Process for the manufacture of a moulded article, a filling mass, a coating composition or a support for vitamins, minerals and/or active substances, **characterized in that** a mass of chocolate or of a product similar to chocolate obtained by the process according to one of claims 1 to 7 is used as the starting material.
